# EUROPÄISCHE PATENTANMELDUNG

(11) **EP 4 775 039 A1**
(43) Veröffentlichungstag der Anmeldung: **15.07.2026**
(21) Anmeldenummer: 26150313.0
(22) Anmeldetag: 06.01.2026
(51) Int. Cl.: A22C 15/00, A22C 11/02

(54) **NAHRUNGSMITTELMASCHINE MIT STEUEREINRICHTUNG UND BETRIEBSVERFAHREN**

(30) Priorität: 09.01.2025 DE 102025100600
(71) Anmelder: VEMAG Maschinenbau GmbH, 27283 Verden/Aller (DE)
(72) Erfinder: Otten, Manuel, 27308 Kirchlinteln (DE); Zarezki, Thomas, 19288 Ludwigslust (DE)
(74) Vertreter: Eisenführ Speiser

(57) **Zusammenfassung**

Die Erfindung betrifft eine Nahrungsmittelmaschine (1) zur Herstellung von Lebensmitteln (2) mit einer Aufhängevorrichtung (10), die eine Mehrzahl von Aufhängehaken (11) aufweist, welche über einen Antriebsstrang (12) mit einem Antrieb (13) gekoppelt sind und entlang einer vorgegebenen Transportbahn (14) bewegbar sind. Eine Steuereinrichtung (30) ist dazu eingerichtet, die Nahrungsmittelmaschine (1) in einem Bestückungsbetrieb (BB) zu steuern, indem der Antrieb (13) den Antriebsstrang (12) in Transportrichtung (T) antreibt, sodass die Aufhängehaken (11) nacheinander in einen Übergabebereich (44) einer Übergabeeinrichtung (40) gelangen, um Lebensmittel (2) aufzunehmen. Ferner ist die Steuereinrichtung (30) für einen Korrekturbetrieb (KB) ausgelegt, in dem sie den Antrieb (13) zum Antreiben des Antriebsstrangs (12) entgegen der Transportrichtung (T) ansteuert, wodurch Fehlpositionierungen korrigiert und die Prozesssicherheit sowie Genauigkeit verbessert werden.

## Beschreibung

Die vorliegende Erfindung betrifft eine Nahrungsmittelmaschine zum Herstellen von Lebensmitteln. Die Nahrungsmittelmaschine umfasst eine Aufhängevorrichtung mit einer Mehrzahl von Aufhängehaken, die mit einem Antriebsstrang gekoppelt sind und einem mit dem Antriebsstrang wirkverbundenen Antrieb, der zum Bewegen der Aufhängehaken entlang einer vordefinierten Transportbahn eingerichtet ist, eine Steuereinrichtung, die zum Steuern der Nahrungsmittelmaschine in einem Bestückungsbetrieb eingerichtet ist, wobei die Steuereinrichtung den Antrieb zum Antreiben des Antriebsstrangs in einer Transportrichtung ansteuert und mindestens eine Übergabeeinrichtung, die zum Übergeben eines Lebensmittels in einem Übergabebereich an die Aufhängevorrichtung eingerichtet ist. Dabei sind die Aufhängehaken dazu eingerichtet, im Bestückungsbetrieb beim Bewegen entlang der Transportbahn sequentiell in den Übergabebereich hineinbewegt zu werden, um zumindest einen Abschnitt des Lebensmittels von der Übergabeeinrichtung aufzunehmen. Die Erfindung betrifft ferner eine Steuereinrichtung für eine solche Nahrungsmittelmaschine und ein Betriebsverfahren.

Als Nahrungsmittelmaschine wird vorliegend eine Kombination verschiedener, auch einzeln betreibbarer Nahrungsmittelmaschinen, die zur Produktion und zum Transport von Lebensmitteln ausgelegt sind verstanden. Diese umfasse dabei mindestens der Antriebsstrang, die Aufhängevorrichtung, eine Übergabeeinrichtung und eine Steuereinrichtung.

Eine Nahrungsmittelmaschine nach dem Oberbegriff von Anspruch 1 wird in JP 2022 39 156 A offenbart.

Auf dem Gebiet der Nahrungsmittelverarbeitung ist es üblich, Nahrungsmittelmaschine zu verwenden, die verschiedene Schritte der Lebensmittelproduktion automatisieren. Bekannte Systeme umfassen typischerweise Übergabeeinrichtung, wie Transportbänder oder Transportrutschen, Aufhängevorrichtungen und Steuereinrichtungen, die zusammenarbeiten, um Lebensmittel effizient zu verarbeiten und zu transportieren. Diese Nahrungsmittelmaschine sind oft so konzipiert, dass sie Lebensmittel in einem kontinuierlichen Prozess von einer Station zur nächsten bewegen, wobei Bestrebungen bestehen, möglichst viele der Prozessschritte zu automatisieren, um die Effizienz und Konsistenz der Produktion zu maximieren. Ein Anwendungsbereich solcher Nahrungsmittelmaschinen stellt die Wurstproduktion dar. Einzelne Geräte solcher Nahrungsmittelmaschinen befüllen dabei bevorzugt Wurststränge, drehen diese ab und portionieren sie in Wurstketten portionieren, bevor sie an Aufhängehaken zur weiteren Verarbeitung übergeben werden.

Gemäß bekannter Technologien sind diese Nahrungsmittelmaschinen in der Regel darauf ausgelegt, Lebensmittel in einer festen Transportrichtung zu bewegen. Dies bedeutet, dass die Lebensmittel kontinuierlich entlang einer vordefinierten Transportbahn von einer Station zur nächsten bewegt werden. Während dieses Prozesses können jedoch verschiedene Probleme auftreten, wie zum Beispiel Darmplatzer, Füllstanddefizite oder Gewichtsabweichungen, die zu einer Unterbrechung der Produktion bzw. einem Ausbleiben von Lebensmittelprodukten führen. Dies führt insbesondere bei der Übergabe von Lebensmitteln von der Übergabeeinrichtung an die Aufhängevorrichtung zu einer geringeren Produktivität der nachgelagerten Prozesse, da die Aufhängevorrichtung nicht voll bestückt ist und folglich nachgelagerten Prozesse auch nicht unter Vollauslastung betrieben werden können. In der Wurstproduktion werden die Lebensmittel in Form von Würsten beispielsweise von der Aufhängevorrichtung an Rauchstöcke übergeben, die durch derartige Störungen im Produktionsbetrieb dann nicht voll bestückt werden und somit Rauch- oder Kochkammer, in die die Rauchstöcke zur weiteren Verarbeitung üblicherweise bewegt werden, auch nicht voll ausgelastet werden.

Es ist daher ein der vorliegenden Erfindung zugrunde liegendes technisches Problem, eine Nahrungsmittelmaschine bereitzustellen, die die Nachteile bekannter Systeme zumindest teilweise überwindet. Insbesondere ist Aufgabe der vorliegenden Erfindung die Produktivität in der Lebensmittelproduktion zu erhöhen.

Die Erfindung löst die eingangs genannte Aufgabe in einem ersten Aspekt durch eine Nahrungsmittelmaschine nach Anspruch 1.

Die Nahrungsmittelmaschine umfasst eine Aufhängevorrichtung mit einer Mehrzahl von Aufhängehaken, die mit einem Antriebsstrang gekoppelt sind. Diese Aufhängehaken sind durch einen Antrieb, der mit dem Antriebsstrang wirkverbunden ist, entlang einer vordefinierten Transportbahn bewegbar. Der Antrieb ermöglicht die Bewegung der Aufhängehaken und ist somit ein zentraler Bestandteil der Transportmechanik.

Der Antriebsstrang bezeichnet vorliegend eine oder mehrere Komponenten der Aufhängevorrichtung, die die Aufhängehaken mit dem Antrieb koppeln, derart, dass das Antriebsdrehmoment des Antriebs eine Bewegung der Aufhängehaken entlang der Transportbahn bewirkt.

Eine Steuereinrichtung ist zum Steuern der Nahrungsmittelmaschine in einem Bestückungsbetrieb eingerichtet. Diese Steuereinrichtung steuert den Antrieb des Antriebsstrangs in einer vorgegebenen Transportrichtung an. Die Kommunikation zwischen der Steuereinrichtung und dem Antrieb erfolgt durch elektrische oder elektronische Signale, die den Antrieb aktivieren und die Bewegung der Aufhängehaken koordinieren.

Mindestens eine Übergabeeinrichtung ist vorhanden, die zum Übergeben eines Lebensmittels in einem Übergabebereich an die Aufhängevorrichtung eingerichtet ist. Diese Übergabeeinrichtung interagiert mechanisch mit den Aufhängehaken, indem sie das Lebensmittel in den Bereich bringt, in dem die Aufhängehaken das Lebensmittel aufnehmen können. Die Übergabeeinrichtung und die Aufhängevorrichtung sind somit mechanisch und räumlich aufeinander abgestimmt. Die Übergabeeinrichtung ist strategisch positioniert, um eine reibungslose Übergabe der Lebensmittel an die Aufhängehaken zu ermöglichen, während die Steuereinrichtung die präzise Synchronisation der Bewegungen sicherstellt. Diese technischen Merkmale können dazu beitragen, die Herausforderungen bei der Automatisierung der Lebensmittelproduktion zu bewältigen, indem sie eine genauere und effizientere Handhabung der Lebensmittel ermöglichen und gleichzeitig die Flexibilität und Fehlerkorrektur im Betrieb verbessern.

Die Aufhängehaken sind im Bestückungsbetrieb dazu eingerichtet, beim Bewegen entlang der Transportbahn sequentiell in den Übergabebereich hineinbewegt zu werden. Dies ermöglicht es den Aufhängehaken, zumindest einen Abschnitt des Lebensmittels von der Übergabeeinrichtung aufzunehmen. Die Synchronisation zwischen der Bewegung der Aufhängehaken und der Positionierung der Lebensmittel durch die Übergabeeinrichtung ist entscheidend für den reibungslosen Betrieb der Nahrungsmittelmaschine.

Die Erfindung schlägt in Bezug auf eine Nahrungsmittelmaschine der eingangs genannten Art insbesondere vor, dass die Steuereinrichtung zum Steuern der Nahrungsmittelmaschine in einem Korrekturbetrieb eingerichtet ist. Die Steuereinrichtung ist dabei dazu ausgebildet, den Antrieb zum Antreiben des Antriebsstrangs entgegen der Transportrichtung anzusteuern. Mit anderen Worten ist die Steuereinrichtung ist dabei so ausgelegt und steuerungstechnisch mit dem Antrieb verbunden, dass sie den Antrieb zum Antreiben des Antriebsstrangs entgegen der Transportrichtung ansteuern kann. Dies ermöglicht es, Korrekturen vorzunehmen, indem die Aufhängehaken rückwärts bewegt werden. Die Kommunikation zwischen der Steuereinrichtung und dem Antrieb erfolgt auch hier durch entsprechende Steuerbefehle, die die Bewegungsrichtung des Antriebs umkehren. Diese Funktion kann besonders nützlich sein, um Fehler zu korrigieren, die während des Bestückungsbetriebs auftreten können, wie z.B. das Fehlen von Lebensmittelportionen oder Produktionsfehler, wie Darmplatzer. Durch die Möglichkeit, die Richtung des Antriebsstrangs umzukehren, kann die Nahrungsmittelmaschine flexibel auf verschiedene Betriebsbedingungen reagieren und die Gesamtproduktivität und Zuverlässigkeit erhöhen.

Darüber hinaus ergeben sich weitere vorteilhafte Ausführungsformen aus den abhängigen Ansprüchen und der Beschreibung.

Erfindungsgemäß ist in der Steuereinrichtung ein Hakenabstand zwischen jeweils zwei aufeinanderfolgenden Aufhängehaken hinterlegt. Dies bedeutet, dass die Steuereinrichtung Informationen über den spezifischen Abstand zwischen den Aufhängehaken speichert und verwaltet. Diese Information ist entscheidend für die präzise Steuerung der Bewegung der Aufhängehaken entlang der Transportbahn. Die Steuereinrichtung ist ferner dazu eingerichtet, den Antrieb durch Bereitstellen eines Steuerimpulses zum Antreiben des Antriebsstrangs entgegen der Transportrichtung derart anzusteuern, dass sich die Aufhängehaken jeweils um den Hakenabstand entgegen der Transportrichtung bewegen. Dies impliziert, dass die Steuereinrichtung in der Lage ist, gezielte Steuerimpulse zu generieren, die den Antrieb veranlassen, den Antriebsstrang präzise um den hinterlegten Hakenabstand entgegen der im Bestückungsbetrieb genutzten Transportrichtung zu bewegen. Dies ermöglicht eine exakte und vollständig automatisierbare Korrekturmöglichkeit, falls es zu einer Fehlpositionierung der Lebensmittel kommt. Dies kann die Effizienz und Zuverlässigkeit der Nahrungsmittelmaschine erheblich steigern, da Fehler schnell und präzise korrigiert werden können. Ferner ermöglicht die hinterlegte Information über den Hakenabstand eine flexible Anpassung der Nahrungsmittelmaschine an verschiedene Produktionsanforderungen und Lebensmittelgrößen, da die Steuereinrichtung entsprechend programmiert werden kann, um unterschiedliche Hakenabstände zu berücksichtigen. Dies erhöht die Vielseitigkeit und Anpassungsfähigkeit der Nahrungsmittelmaschine.

Gemäß einer Ausführungsform umfasst die Nahrungsmittelmaschine eine Betätigungseinrichtung, insbesondere einen Tastschalter, die dazu eingerichtet ist, durch eine manuelle Betätigung jeweils die Steuereinrichtung zum Bereitstellen des Steuerimpulses zu veranlassen. Diese Betätigungseinrichtung stellt eine zusätzliche Komponente dar, die die Interaktion zwischen dem Benutzer und der Steuereinrichtung der Nahrungsmittelmaschine ermöglicht. Die beispielsweise als Tastschalter ausgebildete Betätigungseinrichtung fungiert als ein Interface, das es dem Benutzer erlaubt, direkt in den Steuerungsprozess der Nahrungsmittelmaschine einzugreifen. Die manuelle Betätigung des Tastschalters initiiert einen Steuerimpuls, der an die Steuereinrichtung weitergeleitet wird. Dieser Steuerimpuls dient als Signal, das die Steuereinrichtung veranlasst, bestimmte Aktionen auszuführen, wie beispielsweise das Starten oder Stoppen des Antriebs, der die Aufhängehaken über den Antriebsstrang bewegt. Somit kann beispielsweise durch einen Bediener zunächst die sogenannte Restfanglänge geprüft werden, also die in der Wurstproduktion die Länge des herabhängenden Endes der zuletzt aufgenommenen Wurstschlaufe. Ist diese Restfanglänge ausreichend lang, kann ein Teil davon auf einem leeren Haken positioniert werden und dieser muss dann nicht entgegen der Transportrichtung zurückbewegt werden. Die Integration der Betätigungseinrichtung erhöht somit die Flexibilität und Benutzerfreundlichkeit der Nahrungsmittelmaschine, da sie es dem Benutzer ermöglicht, schnell, unkompliziert und vor allem bedarfsgerecht den Korrekturbetrieb einzuleiten. Dies trägt zur Effizienz und Genauigkeit des gesamten Herstellungsprozesses bei. Darüber hinaus ermöglicht die Betätigungseinrichtung eine unmittelbare und intuitive Bedienung der Nahrungsmittelmaschine, was die Notwendigkeit für komplexe und zeitaufwändige Programmierungen oder Einstellungen reduziert.

Gemäß einer weiteren Ausführungsform ist der Steuerimpuls ein erster Steuerimpuls. Die Betätigungseinrichtung ist dabei dazu eingerichtet, bei einer manuellen Betätigung, die mindestens einer vordefinierten Mindestdauer entspricht, die Steuereinrichtung zum Bereitstellen des ersten Steuerimpulses zu veranlassen. Dies bedeutet, dass die Nahrungsmittelmaschine eine gewisse Zeitspanne der manuellen Betätigung benötigt, um den ersten Steuerimpuls zu aktivieren, was eine gezielte und bewusste Bedienung durch den Benutzer erfordert. Diese Funktionalität könnte dazu dienen, eine versehentliche Aktivierung zu verhindern und sicherzustellen, dass der Benutzer die Nahrungsmittelmaschine absichtlich in einen bestimmten Betriebsmodus versetzt. Weiterhin ist die Betätigungseinrichtung dazu eingerichtet, bei einer manuellen Betätigung, die kürzer als die vordefinierte Mindestdauer ist, die Steuereinrichtung zum Bereitstellen eines zweiten Steuerimpulses zum Antreiben des Antriebsstrangs in der Transportrichtung zu veranlassen. Diese Unterscheidung zwischen verschiedenen Betätigungsdauern ermöglicht eine differenzierte Steuerung der Nahrungsmittelmaschine, wobei kurze Betätigungen eine andere Funktion auslösen als längere Betätigungen. Konkret könnte dies bedeuten, dass eine kurze Betätigung den üblichen Bestückungsbetrieb auslöst und nur das bewusste, längere Betätigen den Korrekturbetrieb einleitet. Die ermöglicht eine erhöhte Präzision und Kontrolle in den Betrieb der Nahrungsmittelmaschine.

Gemäß einer weiteren Ausführungsform umfasst die Übergabeeinrichtung mindestens ein Steuergerät, wobei die Steuereinrichtung in das Steuergerät der Übergabeeinrichtung integriert ist. Durch die Integration der Steuereinrichtung in das Steuergerät der Übergabeeinrichtung wird eine direkte und effiziente Kommunikation zwischen der Übergabeeinrichtung und der Steuereinrichtung gewährleistet. Dies bedeutet, dass die Steuerbefehle und Rückmeldungen zwischen diesen beiden Komponenten ohne Verzögerungen oder Verluste übertragen werden können, was zu einer präziseren Steuerung der Übergabeprozesse führt. Diese Integration führt zu einer verbesserten Synchronisation der Bewegungen der Aufhängehaken und der Übergabeeinrichtung, was die Effizienz und Genauigkeit des Bestückungsbetriebs erhöht. Darüber hinaus ermöglicht die Integration der Steuereinrichtung in das Steuergerät die Komplexität der Verkabelung und der Steuerlogik zu reduzieren. Dies führt zu einer vereinfachten Wartung und Fehlerdiagnose. Die Integration der Steuereinrichtung in das Steuergerät der Übergabeeinrichtung ermöglicht es auch, die Steueralgorithmen und -strategien zu optimieren, da die Steuerung der Übergabeeinrichtung und der Aufhängevorrichtung aus einer Hand erfolgt. Dies kann zu einer verbesserten Leistung der Nahrungsmittelmaschine führen, da die Steuerung der verschiedenen Komponenten besser aufeinander abgestimmt werden kann.

Gemäß einer weiteren Ausführungsform umfasst die Nahrungsmittelmaschine zusätzlich eine Füllmaschine zum Befüllen eines Kunst- oder Naturdarms mit einer Brätmasse. Die Steuereinrichtung der Nahrungsmittelmaschine ist der Füllmaschine zugeordnet, was bedeutet, dass die Steuerung der Füllmaschine entweder durch die zentrale Steuereinrichtung der Nahrungsmittelmaschine erfolgt oder dass die Steuereinrichtung der Nahrungsmittelmaschine in der Lage ist, mit der Steuerung der Füllmaschine zu kommunizieren. Dies ermöglicht eine koordinierte Steuerung der Aufhängevorrichtung und der Füllmaschine, wodurch der gesamte Produktionsprozess effizienter gestaltet werden kann. Insbesondere kann die Steuereinrichtung der Nahrungsmittelmaschine in die Füllmaschinensteuerung integriert sein, was bedeutet, dass die Steuerung der Füllmaschine und der Nahrungsmittelmaschine in einer einzigen Steuerungseinheit zusammengefasst sind. Dies hat den Vorteil, dass die Kommunikation zwischen den beiden Nahrungsmittelmaschinen optimiert wird, da keine separate Schnittstelle erforderlich ist, um die beiden Steuerungseinheiten miteinander zu verbinden. Eine solche Integration kann die Reaktionszeiten verkürzen und die Synchronisation der beiden Nahrungsmittelmaschinen verbessern, was zu einer höheren Produktionsgeschwindigkeit und einer besseren Produktqualität führen kann. Darüber hinaus kann die Integration der Steuereinrichtung in die Füllmaschinensteuerung die Komplexität der gesamten Nahrungsmittelmaschinensteuerung reduzieren, da weniger separate Steuerungskomponenten erforderlich sind. Dies kann auch die Wartung und Fehlerbehebung vereinfachen, da alle relevanten Steuerungsfunktionen in einer einzigen Einheit zusammengefasst sind.

Gemäß einer weiteren Ausführungsform umfasst die Nahrungsmittelmaschine zusätzlich mindestens einen Darmplatzerüberwachungs-Steuerabschnitt, der zum Überwachen von Darmplatzern mit mindestens einem Sensor, insbesondere optischen Sensor und der Steuereinrichtung kommuniziert. Der optische Sensor des Steuerabschnitts erfasst visuelle Daten, die auf das Vorhandensein eines Darmplatzers hinweisen, und übermittelt diese Daten an die Steuereinrichtung. Diese präzise Überwachung ist besonders wichtig in der Lebensmittelproduktion, wo die Qualität und Sicherheit der Produkte von höchster Bedeutung sind. Die Steuereinrichtung ist daraufhin so eingerichtet, dass sie bei Identifizierung eines Darmplatzers den Antrieb zum Antreiben des Antriebsstrangs entgegen der Transportrichtung im Korrekturbetrieb ansteuert. Dies ermöglicht eine sofortige Reaktion auf erkannte Darmplatzer und damit einhergehende Produktionsunterbrechungen durch entsprechendes Ansteuern der Aufhängevorrichtung zum Initiieren des Korrekturbetriebs. Die Kombination aus optischer Überwachung und automatisierter Steuerung im Korrekturbetrieb stellt sicher, dass die Nahrungsmittelmaschine nicht nur in der Lage ist, solche Probleme zu erkennen, sondern auch sofortige Maßnahmen zu ergreifen.

Gemäß einer weiteren Ausführungsform umfasst die Nahrungsmittelmaschine zusätzlich mindestens einen Füllstandüberwachungs-Steuerabschnitt, der zur Füllstandüberwachung eines Trichters einer Füllmaschine der Nahrungsmittelmaschine mit einem Füllstandsensor und der Steuereinrichtung kommuniziert. Diese Kommunikation erfolgt insbesondere über eine Schnittstelle, die es dem Füllstandsensor ermöglicht, kontinuierlich oder in regelmäßigen Abständen Daten über den Füllstand des Trichters an die Steuereinrichtung zu übermitteln. Der Füllstandsensor erfasst den aktuellen Füllstand des Trichters und sendet diese Informationen an die Steuereinrichtung, die daraufhin den Füllstandüberwachungs-Steuerabschnitt aktiviert. Dieser Steuerabschnitt analysiert die empfangenen Daten und identifiziert, ob ein Füllstanddefizit vorliegt, das heißt, ob der Füllstand des Trichters unter einen vorgegebenen Mindestwert gefallen ist. Sollte ein solches Defizit festgestellt werden, ist die Steuereinrichtung dazu eingerichtet, den Antrieb zum Antreiben des Antriebsstrangs entgegen der Transportrichtung im Korrekturbetrieb anzusteuern. Somit werden die Aufhängehaken entgegen der Transportrichtung bewegt und nach dem erneuten Füllen des Trichters kann der Betrieb fortgesetzt werden und die Aufhängevorrichtung voll ausgelastet werden.

Gemäß einer weiteren Ausführungsform umfasst die Nahrungsmittelmaschine zusätzlich mindestens einen Gewichtskontroll-Steuerabschnitt, der zur Gewichtskontrolle der an den Aufhängehaken hängenden Lebensmittel mit einer Wägezelle und der Steuereinrichtung kommuniziert. Diese Kommunikation zwischen dem Gewichtskontroll-Steuerabschnitt und der Steuereinrichtung erfolgt typischerweise über ein drahtgebundenes oder drahtloses Kommunikationsnetzwerk, das es ermöglicht, dass die von der Wägezelle erfassten Gewichtsdaten in Echtzeit an die Steuereinrichtung übermittelt werden. Die Wägezelle misst kontinuierlich oder intervallweise das Gewicht der Lebensmittel, die an den Aufhängehaken hängen, und sendet diese Daten an den Gewichtskontroll-Steuerabschnitt, der sie analysiert und gegebenenfalls ein Gewichtsdefizit identifiziert. Sollte ein Gewichtsdefizit festgestellt werden, sendet der Gewichtskontroll-Steuerabschnitt zumindest auch ein Signal an die Steuereinrichtung, das diese dazu veranlasst, den Antrieb zum Antreiben des Antriebsstrangs entgegen der Transportrichtung im Korrekturbetrieb anzusteuern. Damit kann auf Produktionsunterbrechungen, die als Reaktion auf ein Gewichtsdefizit erfolgen - etwa um Anpassungen an einer Füllmaschine vorzunehmen - reagiert werden. Diese Rückwärtsbewegung des Antriebsstrangs ermöglicht es, die Aufhängehaken in eine Position zurückzubewegen, in der sie bei Wiederaufnahme des Bestückungsbetriebs dann übergebene Lebensmittel aufnehmen können und gewährleistet so eine vollständige Auslastung der Aufhängevorrichtung und nachgelagerter Prozesse.

Gemäß einer weiteren Ausführungsform umfasst die Nahrungsmittelmaschine mindestens einen Produktionsstörungsüberwachungs-Steuerabschnitt, der zum Überwachen von Produktionsstörungen der Nahrungsmittelmaschine eingerichtet ist. Dieser Steuerabschnitt kommuniziert mit zumindest einer Steuerung und/oder zumindest einem Steuergerät der Nahrungsmittelmaschine sowie der Steuereinrichtung. Der Produktionsstörungsüberwachungs-Steuerabschnitt überwacht kontinuierlich den Betrieb der Nahrungsmittelmaschine und identifiziert potenzielle Störungen oder Anomalien im Produktionsprozess. Diese Informationen werden dann an die Steuereinrichtung weitergeleitet, die daraufhin entsprechende Maßnahmen ergreift. Insbesondere ist die Steuereinrichtung dazu eingerichtet, im Falle einer identifizierten Produktionsstörung den Antrieb zum Antreiben des Antriebsstrangs entgegen der Transportrichtung im Korrekturbetrieb anzusteuern. Dies bedeutet, dass die Nahrungsmittelmaschine in der Lage ist, auf erkannte Störungen und damit einhergehende Produktionsunterbrechungen sofort zu reagieren, indem sie den Transport der Lebensmittel in die entgegengesetzte Richtung veranlasst. Die Integration des Produktionsstörungsüberwachungs-Steuerabschnitts bringt somit eine erhebliche Verbesserung der Betriebssicherheit und Effizienz der Nahrungsmittelmaschine mit sich.

Gemäß einer weiteren Ausführungsform umfasst die Nahrungsmittelmaschine zusätzlich mindestens eine Aufnahmeeinrichtung, die dazu eingerichtet ist, an einem in Transportrichtung dem Übergabebereich nachgeschalteten Abnahmebereich die Lebensmittel von den Aufhängehaken bis zum Erreichen einer Sollzahl der aufgenommenen Lebensmittel zu übernehmen, derart, dass die Lebensmittel auf der Aufnahmeeinrichtung, insbesondere in Chargen, mit einer vordefinierten Sollzahl gruppiert werden. Diese Aufnahmeeinrichtung stellt sicher, dass die Lebensmittel, die von den Aufhängehaken transportiert werden, systematisch und präzise in einer definierten Menge gesammelt werden, bevor sie weiterverarbeitet oder verpackt werden. Dies ermöglicht eine effiziente und geordnete Handhabung der Lebensmittel, was besonders in automatisierten Produktionslinien von Vorteil ist, da es die Nachverfolgbarkeit und Konsistenz der produzierten Chargen verbessert. Darüber hinaus umfasst die Nahrungsmittelmaschine eine Gareinrichtung zum Garen, insbesondere Kochen und/oder Räuchern der, insbesondere in Chargen, gruppierten Lebensmittel auf der Aufnahmeeinrichtung. Die Kommunikation zwischen den Komponenten erfolgt dabei über die Steuereinrichtung, die sowohl den Antrieb des Antriebsstrangs als auch die Aufnahmeeinrichtung und die Gareinrichtung koordiniert. Die Steuereinrichtung stellt sicher, dass die Lebensmittel in der richtigen Menge von den Aufhängehaken zur Aufnahmeeinrichtung und schließlich zur Gareinrichtung transportiert werden. Dies geschieht durch präzise Steuerung der Bewegungen des Antriebsstrangs und der Aufnahmeeinrichtung zum Erreichen der Sollzahl der Lebensmittel in den Chargen.

Gemäß einer weiteren Ausführungsform umfasst die Nahrungsmittelmaschine eine Aufnahmeeinrichtung, die einen Rauchstock beinhaltet. Diese Aufnahmeeinrichtung ist so gestaltet, dass sie eine effiziente Handhabung und Weiterverarbeitung der Lebensmittel ermöglicht. Die Gareinrichtung ist als Rauch- und/oder Kochkammer ausgebildet, was bedeutet, dass die Nahrungsmittelmaschine nicht nur für die Herstellung, sondern auch für die Weiterverarbeitung der Lebensmittel, wie das Räuchern oder Kochen, geeignet ist. Die Aufnahmeeinrichtung umfasst ferner bevorzugt einen Roboter, was auf eine Automatisierung der Prozesse erlaubt. Der Roboter ist dazu eingerichtet, den Rauchstock in den Abnahmebereich zu bewegen, was bedeutet, dass der Roboter eine präzise und kontrollierte Bewegung des Rauchstocks gewährleistet. Diese Automatisierung reduziert den manuellen Aufwand und erhöht die Effizienz des gesamten Prozesses. Darüber hinaus ist der Roboter dazu eingerichtet, den Rauchstock mit den auf den Aufhängehaken aufgenommenen Lebensmitteln in Eingriff zu bringen. Dies bedeutet, dass der Roboter in der Lage ist, die Lebensmittel von den Aufhängehaken zu entnehmen und auf den Rauchstock zu platzieren, was eine nahtlose Übergabe der Lebensmittel von der Aufhängevorrichtung zur Aufnahmeeinrichtung ermöglicht. Schließlich ist der Roboter dazu eingerichtet, die Lebensmittel von den Aufhängehaken auf den Rauchstock zu übergeben, was den Übergabeprozess weiter automatisiert und die Notwendigkeit manueller Eingriffe minimiert.

Gemäß einer weiteren Ausführungsform umfasst die Übergabeeinrichtung eine oder mehrere der folgenden Komponenten: mindestens ein Transportband zum Transportieren eines Lebensmittels in den Übergabebereich, eine Abdrehvorrichtung zum Abdrehen eines Wurststranges in eine Wurstkette und eine Abteilvorrichtung zum Trennen und Portionieren einer Wurstkette in Wurstportionen. Das Transportband ermöglicht einen kontinuierlichen und gleichmäßigen Transport der Lebensmittel in den Übergabebereich, was die Effizienz des Bestückungsbetriebs erhöht und die Notwendigkeit manueller Eingriffe minimiert. Die Abdrehvorrichtung sorgt dafür, dass Wurststränge automatisch in Wurstketten abgedreht werden, was die Konsistenz und Qualität der produzierten Wurstketten verbessert und gleichzeitig die Produktionsgeschwindigkeit erhöht. Die Abteilvorrichtung schließlich trennt und portioniert die Wurstketten in gleichmäßige Wurstportionen, was eine präzise Kontrolle über die Portionsgrößen ermöglicht und somit den Anforderungen an die Produktqualität und -spezifikation gerecht wird. Die Steuereinrichtung der Nahrungsmittelmaschine spielt eine zentrale Rolle bei der Koordination dieser Komponenten. Die Kommunikation zwischen der Steuereinrichtung und den verschiedenen Komponenten wie dem Transportband, der Abdrehvorrichtung und der Abteilvorrichtung erfolgt insbesondere über entsprechende Steuer- und Regelkreise, die sicherstellen, dass alle Prozesse synchronisiert und koordiniert ablaufen. Diese Integration und Automatisierung der verschiedenen Komponenten führen zu einer erheblichen Steigerung der Effizienz und Produktivität der Nahrungsmittelmaschine, reduzieren den manuellen Arbeitsaufwand und verbessern die Qualität und Konsistenz der hergestellten Lebensmittel.

Gemäß einer weiteren Ausführungsform umfasst die Nahrungsmittelmaschine eine Anzeigeeinrichtung mit einer Bedienschnittstelle, wobei die Anzeigeeinrichtung dazu eingerichtet ist, eine Position der Aufhängehaken anzuzeigen, und die Bedienschnittstelle zum Auswählen einer Zielposition der Aufhängehaken zum Bewegen im Korrekturbetrieb aufweist. Die Anzeigeeinrichtung ermöglicht es dem Bediener, die aktuelle Position der Aufhängehaken entlang der Transportbahn in Echtzeit zu überwachen, was die Präzision und Kontrolle über den Produktionsprozess erheblich verbessert. Durch die Bereitstellung einer Bedienschnittstelle wird dem Bediener zudem die Möglichkeit gegeben, eine spezifische Zielposition für die Aufhängehaken auszuwählen, zu der diese im Korrekturbetrieb bewegt werden sollen. Dies ist besonders nützlich, wenn eine manuelle Korrektur oder Anpassung der Position der Aufhängehaken erforderlich ist, um beispielsweise Fehler zu beheben oder spezifische Produktionsanforderungen zu erfüllen. Die Kommunikation zwischen der Anzeigeeinrichtung und der Steuereinrichtung der Nahrungsmittelmaschine erfolgt typischerweise über ein integriertes Steuerungssystem, das sowohl die Positionserfassung als auch die Ansteuerung des Antriebs koordiniert. Die Anzeigeeinrichtung erhält kontinuierlich Positionsdaten von Sensoren, die entlang der Transportbahn installiert sind, und stellt diese Informationen visuell für den Bediener dar. Gleichzeitig ermöglicht die Bedienschnittstelle dem Bediener, Eingaben zu machen, die an die Steuereinrichtung weitergeleitet werden. Die Steuereinrichtung interpretiert diese Eingaben und steuert den Antrieb entsprechend, um die Aufhängehaken zur ausgewählten Zielposition zu bewegen. Diese zusätzlichen Merkmale tragen dazu bei, die Flexibilität und Benutzerfreundlichkeit der Nahrungsmittelmaschine zu erhöhen, indem sie eine einfache und intuitive Möglichkeit bieten, die Position der Aufhängehaken zu überwachen und anzupassen.

Die Erfindung löst die eingangs genannte Aufgabe in einem zweiten Aspekt durch eine Steuereinrichtung nach Anspruch 14. Diese Steuereinrichtung weist eine Steuerschnittstelle zur signalleitenden Verbindung mit der Nahrungsmittelmaschine auf, wodurch eine effektive Kommunikation und Steuerung der verschiedenen Komponenten der Nahrungsmittelmaschine ermöglicht wird. Die Steuerschnittstelle dient als Kommunikationskanal, über den Steuerbefehle und Rückmeldungen zwischen der Steuereinrichtung und der Nahrungsmittelmaschine ausgetauscht werden. Dies gewährleistet eine präzise und koordinierte Steuerung der Nahrungsmittelmaschine während des Betriebs. Die Steuereinrichtung ist dazu eingerichtet, die Nahrungsmittelmaschine in einem Bestückungsbetrieb zu steuern, wobei sie den Antrieb zum Antreiben des Antriebsstrangs in der Transportrichtung ansteuert. Dies bedeutet, dass die Steuereinrichtung in der Lage ist, den Antrieb so zu steuern, dass die Aufhängehaken entlang der vordefinierten Transportbahn bewegt werden, um Lebensmittel von der Übergabeeinrichtung aufzunehmen. Darüber hinaus ist die Steuereinrichtung ferner zum Steuern der Nahrungsmittelmaschine in einem Korrekturbetrieb eingerichtet, wobei sie den Antrieb zum Antreiben des Antriebsstrangs entgegen der Transportrichtung ansteuert. Durch die Ausbildung der Steuereinrichtung zum Übermitteln von Steuerbefehlen zum Initiieren eines Bestückungsbetriebs und eines Korrekturbetriebs, macht sich die Steuereinrichtung gemäß dem zweiten Aspekt die eingangs in Bezug auf den ersten Aspekt der Erfindung genannten Vorteile zu eigen. Vorteile und bevorzugte Ausführungsformen gemäß dem ersten Aspekt der Erfindung sind ebenso Vorteile und bevorzugte Ausführungsformen gemäß dem zweiten Aspekt der Erfindung und umgekehrt.

Die Erfindung löst die eingangs genannte Aufgabe in einem dritten Aspekt durch ein Betriebsverfahren nach Anspruch 15. Das Verfahren beginnt mit dem Bewegen einer Mehrzahl von Aufhängehaken, die mit einem Antriebsstrang gekoppelt sind, durch einen Antrieb, der mit dem Antriebsstrang wirkverbunden ist, entlang einer vordefinierten Transportbahn. Diese Bewegung wird verfahrensgemäß durch Steuern der Nahrungsmittelmaschine in einem Bestückungsbetrieb bewirkt, wobei eine bzw. die Steuereinrichtung der Nahrungsmittelmaschine den Antrieb zum Antreiben des Antriebsstrangs in der Transportrichtung ansteuert. Dies ermöglicht eine koordinierte und kontrollierte Bewegung der Aufhängehaken entlang der Transportbahn, was für die nachfolgenden Schritte des Verfahrens von entscheidender Bedeutung ist. Ein weiterer Schritt des Verfahrens beinhaltet das Übergeben eines Lebensmittels in einem Übergabebereich an die Aufhängevorrichtung durch mindestens eine Übergabeeinrichtung. Diese Übergabeeinrichtung ist so eingerichtet, dass sie das Lebensmittel präzise und zuverlässig an die Aufhängevorrichtung übergibt, was durch die koordinierte Bewegung der Aufhängehaken entlang der Transportbahn unterstützt wird. Ferner umfasst das Verfahren das Steuern der Nahrungsmittelmaschine in einem Korrekturbetrieb, wobei der Antrieb zum Antreiben des Antriebsstrangs entgegen der Transportrichtung durch die Steuereinrichtung angesteuert wird. Durch das Initiieren eines Bestückungsbetriebs und eines Korrekturbetriebs, macht sich das Verfahren gemäß dem dritten Aspekt die eingangs in Bezug auf den ersten Aspekt der Erfindung genannten Vorteile zu eigen. Vorteile und bevorzugte Ausführungsformen gemäß dem ersten Aspekt der Erfindung sind ebenso Vorteile und bevorzugte Ausführungsformen gemäß dem dritten Aspekt der Erfindung und umgekehrt.

Gemäß einer weiteren Ausführungsform umfasst das Verfahren das Überwachen von Darmplatzern durch einen Steuerabschnitt, der mit mindestens einem optischen Sensor und der Steuereinrichtung kommuniziert, wobei die Steuereinrichtung für den Fall, dass der Steuerabschnitt einen Darmplatzer identifiziert, den Antrieb zum Antreiben des Antriebsstrangs entgegen der Transportrichtung im Korrekturbetrieb ansteuert. Dies ermöglicht eine schnelle und präzise Korrektur der Position der Haken im Falle von Produktionsunterbrechungen aufgrund von Darmplatzern.

Gemäß einer weiteren Ausführungsform umfasst das Verfahren das Überwachen eines Füllstands eines Trichters einer Füllmaschine der Nahrungsmittelmaschine durch einen bzw. den Steuerabschnitt, der mit einem Füllstandsensor und der Steuereinrichtung kommuniziert, wobei die Steuereinrichtung für den Fall, dass der Steuerabschnitt ein Füllstanddefizit identifiziert, den Antrieb zum Antreiben des Antriebsstrangs entgegen der Transportrichtung im Korrekturbetrieb ansteuert. Dies ermöglicht eine schnelle und präzise Korrektur der Position der Haken im Falle von Produktionsunterbrechungen aufgrund von Füllstandsdefiziten.

Gemäß einer weiteren Ausführungsform umfasst das Verfahren das Überwachen eines Gewichts von an den Aufhängehaken hängenden Lebensmitteln durch einen bzw. den Steuerabschnitt, der mit einer Wägezelle und der Steuereinrichtung kommuniziert, wobei die Steuereinrichtung für den Fall, dass der Steuerabschnitt ein Gewichtsdefizit identifiziert, den Antrieb zum Antreiben des Antriebsstrangs entgegen der Transportrichtung im Korrekturbetrieb ansteuert. Dies ermöglicht eine schnelle und präzise Korrektur der Position der Haken im Falle von Produktionsunterbrechungen aufgrund von Gewichtsdefiziten.

Gemäß einer weiteren Ausführungsform umfasst das Verfahren das Überwachung von Produktionsstörungen der Nahrungsmittelmaschine durch einen bzw. den Steuerabschnitt, der mit zumindest einer Steuerung und/oder zumindest einem Steuergerät der Nahrungsmittelmaschine und der Steuereinrichtung kommuniziert und die Steuereinrichtung für den Fall, dass der Steuerabschnitt eine Produktionsstörung identifiziert, den Antrieb zum Antreiben des Antriebsstrangs entgegen der Transportrichtung im Korrekturbetrieb ansteuert. Dies ermöglicht eine schnelle und präzise Korrektur der Position der Haken im Falle von Produktionsunterbrechungen aufgrund von Produktionsstörungen.

Gemäß einer weiteren Ausführungsform umfasst das Verfahren zum Steuern der Nahrungsmittelmaschine vor dem Ansteuern des Korrekturbetriebs den Schritt des Stoppens der Aufhängevorrichtung für den Fall, dass eines, mehrere oder sämtliche der folgenden Probleme identifiziert werden: Darmplatzer, ein Füllstanddefizit, ein Gewichtsdefizit und eine Produktionsstörung. Die Steuereinrichtung spielt hierbei eine zentrale Rolle, indem sie kontinuierlich Daten von verschiedenen Sensoren und Überwachungssystemen sammelt, die entlang der Produktionslinie der Nahrungsmittelmaschine installiert sind. Diese Sensoren könnten beispielsweise optische Sensoren zur Erkennung von Darmplatzern, Gewichtssensoren zur Messung des Füllstands und des Gewichts sowie allgemeine Produktionsüberwachungssensoren zur Erkennung von Störungen umfassen. Sobald die Steuereinrichtung ein Problem wie einen Darmplatzer, ein Füllstanddefizit, ein Gewichtsdefizit oder eine Produktionsstörung identifiziert, sendet sie ein Signal an den Antrieb, um die Bewegung der Aufhängevorrichtung zu korrigieren und so auf Produktionsunterbrechungen infolge dieser Fehlermeldungen zu reagieren. Dies stellt bei Wiederaufnahme der Produktion eine vollständige Auslastung der Aufhängehaken der Aufhängevorrichtung sicher.

Gemäß einer weiteren Ausführungsform umfasst das Verfahren zusätzlich den Schritt des Prüfens einer Restfanglänge einer vordefinierten Anzahl von den Übergabebereich vor dem Stoppen der Aufhängevorrichtung zuletzt passierenden Aufhängehaken. Die Steuereinrichtung ist so programmiert, dass sie den Antrieb zum Antreiben des Antriebsstrangs entgegen der Transportrichtung im Korrekturbetrieb nur dann ansteuert, wenn die Restfanglänge unter einem vordefinierten Grenzwert liegt. Sollte die Restfanglänge einen bestimmten Schwellenwert unterschreiten und ein Bestücken des Aufhängehakens, der den Übergabebereich zuletzt passiert hat mit dem Restfang nicht möglich sein, wird der Korrekturbetrieb aktiviert, um die Aufhängehaken entgegen der normalen Transportrichtung zu bewegen. Es wird durch die Überprüfung der Restfanglänge und die bedingte Aktivierung des Korrekturbetriebs sichergestellt, dass die Nahrungsmittelmaschine nur dann in den Korrekturbetrieb wechselt, wenn es tatsächlich notwendig ist, was die Effizienz des Betriebs erhöht und unnötige Bewegungen vermeidet.

Die Erfindung wird im Folgenden unter Bezugnahme auf die beigefügten Figuren anhand bevorzugter Ausführungsbeispiele beschrieben. Hierbei zeigen:
- FIG. 1:: eine Nahrungsmittelmaschine schematisch in einer Seitenansicht;
- FIG. 2a:: ein Ausschnitt einer Aufhängevorrichtung und einer Übergabeeinrichtung für die Nahrungsmittelmaschine gemäß FIG. 1 in einer perspektivischen Ansicht in einem Bestückungsbetrieb;
- FIG. 2b:: ein Ausschnitt einer Aufhängevorrichtung und einer Übergabeeinrichtung für die Nahrungsmittelmaschine gemäß FIG. 1 in einer Draufsicht im Bestückungsbetrieb;
- FIG. 3a:: ein Ausschnitt der Aufhängevorrichtung und der Übergabeeinrichtung gemäß FIG. 2a und FIG. 2b in einer perspektivischen Ansicht in einem Korrekturbetrieb;
- FIG. 3b:: ein Ausschnitt der Aufhängevorrichtung und der Übergabeeinrichtung gemäß FIG. 2a und FIG. 2b in einer Draufsicht im Korrekturbetrieb;
- FIG. 4:: ein Ausschnitt der Aufhängevorrichtung und der Übergabeeinrichtung gemäß FIG. 2a und FIG. 2b im Bestückungsbetrieb nach der Durchführung des Korrekturbetriebs in einer perspektivischen Ansicht;
- FIG. 5: eine Prinzipskizze einer Nahrungsmittelmaschine gemäß einer bevorzugten Ausführungsform; und
- FIG. 6: ein Flussdiagramm eines Verfahrens zum Betreiben einer Nahrungsmittelmaschine gemäß FIG. 1 bzw. FIG. 5.

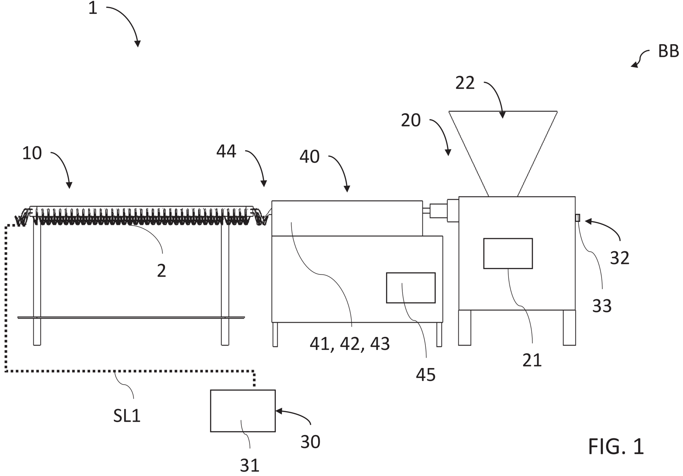

FIG. 1 zeigt eine Nahrungsmittelmaschine 1 zum Herstellen von Lebensmitteln 2 in einem Bestückungsbetrieb BB. Die Nahrungsmittelmaschine 1 umfasst eine Aufhängevorrichtung 10, bevorzugt eine Füllmaschine 20, eine Steuereinrichtung 30 und eine Übergabeeinrichtung 40.

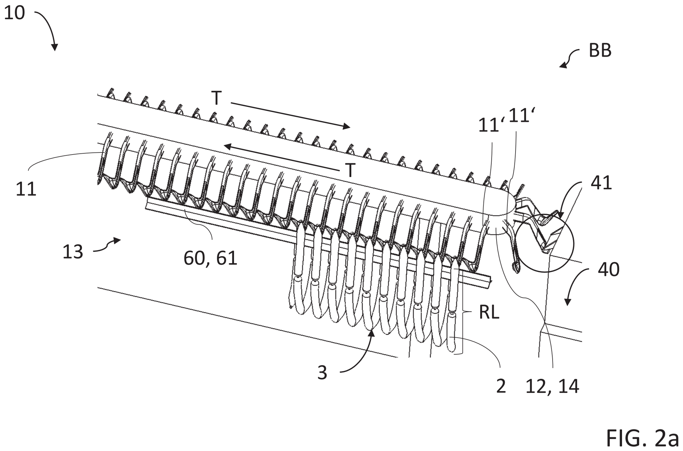

Die Aufhängevorrichtung 10 umfasst eine Mehrzahl von Aufhängehaken 11, die entlang einer vordefinierten Transportbahn T (vgl. FIG. 2a) bewegt werden. Diese Aufhängehaken 11 sind mit einem Antriebsstrang 12 gekoppelt, das durch einen Antrieb 13 in Bewegung gesetzt wird. Die Aufhängehaken 11 dienen dazu, die Lebensmittel 2 zu transportieren.

Die Steuereinrichtung 30 ist zentral für die Steuerung der Nahrungsmittelmaschine 1 und ist mit dem Antrieb 13 verbunden. Sie steuert den Antriebsstrang 12 in der Transportrichtung T im Bestückungsbetrieb BB. Die Steuereinrichtung 30 ist über eine Signalleitung SL1 mit der Nahrungsmittelmaschine 1 verbunden und kommuniziert mit verschiedenen Steuerabschnitten und Sensoren, um den Betrieb zu überwachen und zu steuern. Bevorzugt verfügt die Steuereinrichtung 30 über einen Speicher 31.

Die Füllmaschine 20 umfasst einen Trichter 22 zum Befüllen eines Kunst- oder Naturdarms mit einer Brätmasse. Die Füllmaschine 20 ist mit einer Füllmaschinensteuerung 21 ausgestattet, die in die Steuereinrichtung 30 integriert sein kann. Diese Steuerung ermöglicht eine präzise Kontrolle des Füllvorgangs und stellt sicher, dass die Lebensmittel 2 gleichmäßig und effizient befüllt werden.

Die Übergabeeinrichtung 40 ist für die Übergabe der Lebensmittel 2 an die Aufhängevorrichtung 10 verantwortlich. Sie umfasst in dem gezeigten Ausführungsbeispiel mindestens ein Transportband 41, das dazu eingerichtet ist, ein Lebensmittel 2 in den Übergabebereich 44 zu transportieren. Die Lebensmittel 2 werden von der Übergabeeinrichtung 40 an die Aufhängehaken 11 übergeben, die entlang der Transportbahn 14 bewegt werden. Ferner umfasst die Übergabeeinrichtung 40 vorliegend eine Abdrehvorrichtung 42 und eine Abteilvorrichtung 43. Diese Komponenten arbeiten zusammen, um die Lebensmittel 2 in einen Übergabebereich 44 zu transportieren und dort an die Aufhängehaken 11 der Aufhängevorrichtung zu übergeben. Alternativ kann die Übergabeeinrichtung auch durch eine einfache Rutsche oder andere Komponenten zum Bringen von Lebensmitteln in den Übergabebereich ausgebildet sein. Die Übergabeeinrichtung 40 ist mit einem Steuergerät 45 ausgestattet, in das die Steuereinrichtung 30 integriert sein kann. Dieses Steuergerät 45 ermöglicht eine präzise Steuerung der Übergabeprozesse und stellt sicher, dass die Lebensmittel 2 korrekt und effizient an die Aufhängevorrichtung 10 übergeben werden.

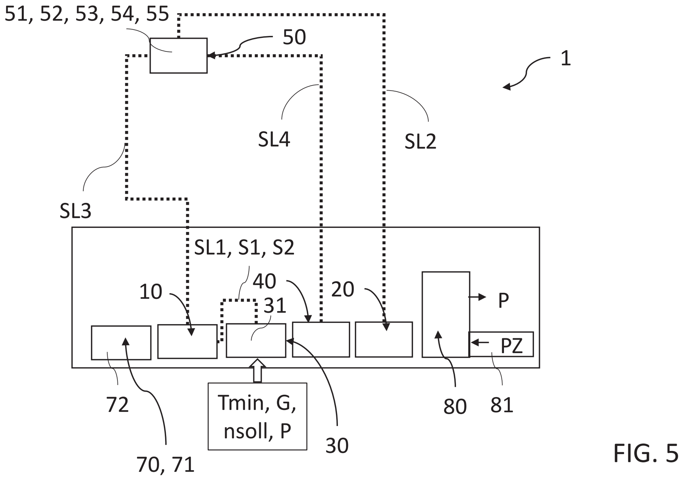

Bevorzugt ist eine Betätigungseinrichtung 32, die insbesondere einen Tastschalter 33 umfasst, der manuell betätigt werden kann, um die Steuereinrichtung 30 zu aktivieren und Steuerimpulse (vgl. FIG. 5) zu senden. Diese Betätigungseinrichtung 32 ermöglicht eine manuelle Steuerung der Steuereinrichtung 30, um den Antrieb 13 durch Bereitstellen eines Steuerimpulses, insbesondere eines ersten Steuerimpulses S1, zum Antreiben des Antriebsstrangs 12 entgegen der Transportrichtung T anzusteuern. Bei einer manuellen Betätigung, die kürzer als eine vordefinierte Mindestdauer Tmin (vgl. FIG. 5) ist, wird ein zweiter Steuerimpuls S2 bereitgestellt, um den Antrieb 13 zum Antreiben des Antriebsstrang 12 in der Transportrichtung T anzusteuern. Diese Steuerimpulse dienen dazu, den Antrieb 13 zu steuern und den Antriebsstrang 12 anzutreiben und die Aufhängehaken 11 in der gewünschten Richtung zu bewegen.

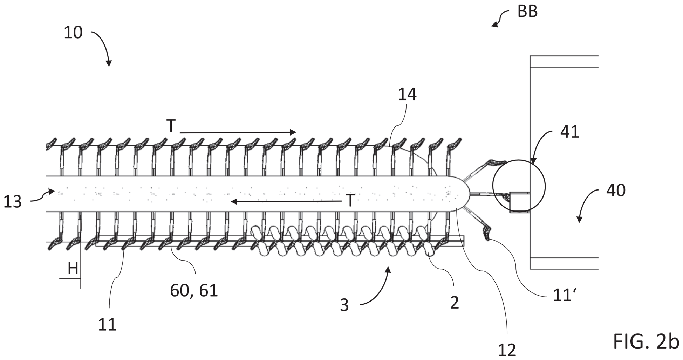

FIG. 2a und FIG. 2b zeigen einen Ausschnitt der Übergabeeinrichtung 40 und die Aufhängevorrichtung 10 der Nahrungsmittelmaschine 1 in einem Bestückungsbetrieb BB.

Die Steuereinrichtung 30 ist dabei so eingerichtet, dass sie die Nahrungsmittelmaschine 1 in einem Bestückungsbetrieb BB steuert. In diesem Betrieb steuert die Steuereinrichtung 30 den Antrieb 13 an, um der Antriebsstrang 12 in der Transportrichtung T zu bewegen. Die Aufhängehaken 11 sind so angeordnet, dass sie sich sequentiell in den Übergabebereich 44 hineinbewegen, um zumindest einen Abschnitt des Lebensmittels 2 von der Übergabeeinrichtung 40 aufzunehmen.

Eine Aufnahmeeinrichtung 60, die einen Rauchstock 61 umfasst, ist in FIG. 2a und FIG. 2b ebenfalls dargestellt. Diese Aufnahmeeinrichtung 60 übernimmt die Lebensmittel 2 von den Aufhängehaken 11 in einem Abnahmebereich und gruppiert sie in Chargen 3 mit einer vordefinierten Sollzahl nsoll (vgl. FIG. 5). Die Aufnahmeeinrichtung 60 ist dazu eingerichtet, die Lebensmittel 2 in einer Gareinrichtung (vgl. FIG. 5) zu garen, insbesondere zu kochen und/oder zu räuchern.

Vorliegend hängen die Lebensmittel 2 in Form von Wurststrängen an den Aufhängehaken 11. Diese Wurststränge werden in Chargen 3 gruppiert und entlang der Transportbahn 14 transportiert.

Kommt es zu einer Störung im Produktionsbetrieb werden in der Regel keine weiteren Lebensmittel 2 im Übergabebereich 41 an die Aufhängevorrichtung 10 übergeben, sodass mindestens ein Aufhängehaken 11', der den Übergabebereich zuletzt passiert hat, leer ist und dies ohne geeignete Gegenmaßnahmen auch verbleibt. An dem zuletzt bestückten Aufhängehaken hängt somit ein Ende einer Würstchenkette, dessen Länge als sogenannte Restfanglänge bezeichnet wird.

Die leer verbleibenden Aufhängehaken 11' führen dazu, dass bei einer Fortführung des Bestückungsbetriebs BB, die vorliegend bevorzugt als Rauchstock 61 ausgebildete Aufnahmeeinrichtung 60 nicht voll bestückt werden kann.

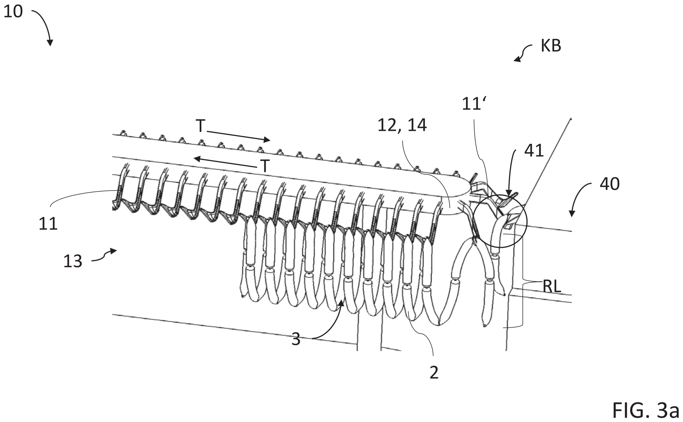

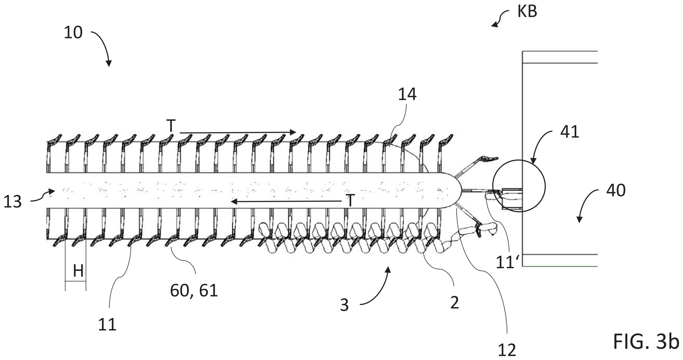

FIG. 3a und FIG. 3b veranschaulichen die Übergabeeinrichtung 40 und die Aufhängevorrichtung 10 der Nahrungsmittelmaschine 1 in einem Korrekturbetrieb KB, durch den eine vollständige Bestückung der Aufnahmeeinrichtung 60 gewährleistet werden soll.

Im gezeigten Korrekturbetrieb KB, der durch die Steuereinrichtung 30 (vgl. FIG. 1) angesteuert wird, wird der Antrieb 13 so angesteuert, dass der Antriebsstrang 12 entgegen der Transportrichtung T bewegt wird. Dies ermöglicht eine Korrektur der Position der Aufhängehaken 11 entlang der Transportbahn 14.

FIG. 3b zeigt den Hakenabstand H zwischen jeweils zwei aufeinanderfolgenden Aufhängehaken 11. Die Steuereinrichtung 30 ist dazu eingerichtet, den Antrieb 13 durch Bereitstellen eines Steuerimpulses S1 zum Antreiben des Antriebsstrangs 12 entgegen der Transportrichtung T derart anzusteuern, dass sich die Aufhängehaken 11 jeweils um den Hakenabstand H entgegen der Transportrichtung T bewegen.

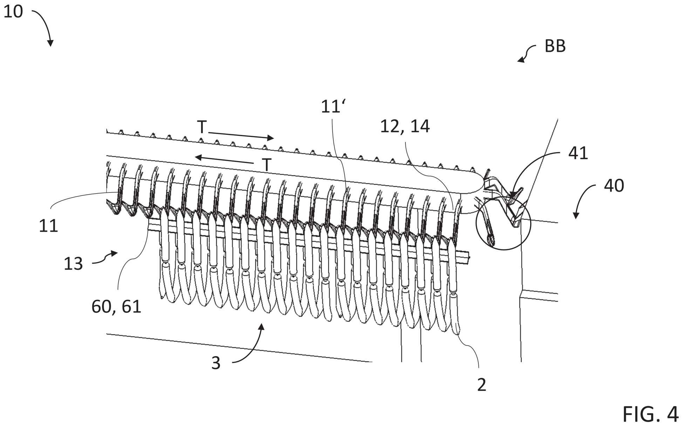

FIG. 4 veranschaulicht die Übergabeeinrichtung 40 und die Aufhängevorrichtung 10 der Nahrungsmittelmaschine 1 bei der in FIG. 2a und FIG. 2b eine Produktionsstörung und infolge dessen unbestückte Aufhängehaken 11' aufgetreten sind, nachdem in der Korrekturbetrieb KB gemäß FIG. 3a und FIG. 3b durchgeführt wurde. Die zuvor leeren Aufhängehaken 11' wurden von dem Antriebsstrang 12 infolge der Ansteuerung durch die Steuereinrichtung 30 entgegen der Transportrichtung T zurück in den Übergabebereich 41 bewegt. Dort konnte der in FIG. 3b nach der Rückwärtsbewegung im Übergabebereich 41 positionierte Aufhängehaken 11' dann ein Lebensmittel 2 von der Übergabeeinrichtung übernehmen und es entstehen keine Lücken mit unbestückten Aufhängehaken 11 und eine vollständige Charge 3 mit der gewünschten Sollzahl an Lebensmitteln 2 kann auf die Aufnahmeeinrichtung 60 übergeben werden, wie in FIG. 4 gezeigt.

FIG. 5 zeigt eine schematische Darstellung der Nahrungsmittelmaschine 1, deren verschiedene Komponenten und deren Verbindungen. Die Nahrungsmittelmaschine 1 umfasst die Aufhängevorrichtung 10, die Übergabeeinrichtung 40, die Steuereinrichtung 30 sowie bevorzugt die Füllmaschine 20, eine Anzeigeeinrichtung 80, eine Gareinrichtung 70 und eine Aufnahmeeinrichtung 60. Die Komponenten sind durch verschiedene Signalleitungen SL1, SL2, SL3 und SL4 miteinander verbunden.

Die Aufhängevorrichtung 10, die Übergabeeinrichtung 40 und die Füllmaschine 20sind bevorzugt, wie in Bezug auf FIG. 1 erläutert, ausgebildet. Die Steuereinrichtung 30 steuert in zuvor beschriebener Weise die verschiedenen Betriebsmodi der Nahrungsmittelmaschine 1, einschließlich des Bestückungsbetriebs BB und des Korrekturbetriebs KB.

Die Füllmaschine 20 ist mit der Steuereinrichtung 30 verbunden und kann über die Signalleitung SL2 gesteuert werden. Die Steuereinrichtung 30 ist bevorzugt in die Füllmaschinensteuerung integriert und kann den Antrieb der Füllmaschine 20 basierend auf den von den Steuerabschnitten bereitgestellten Daten ansteuern.

Die Steuereinrichtung 30 ist mit verschiedenen Steuerabschnitten 50 verbunden, die zur Überwachung und Steuerung spezifischer Parameter der Nahrungsmittelmaschine 1 dienen. Diese Steuerabschnitte umfassen unter anderem den Darmplatzerüberwachungs-Steuerabschnitt 51, den Füllstandüberwachungs-Steuerabschnitt 52, den Gewichtskontroll-Steuerabschnitt 53 und den Produktionsstörungsüberwachungs-Steuerabschnitt 55. Diese Steuerabschnitte sind über Signalleitungen SL2, SL3 und SL4 mit der Steuereinrichtung 30 verbunden.

Die Steuereinrichtung 30 ist dazu eingerichtet, Steuerimpulse SL1, S1 und S2 bereitzustellen, um den Antrieb der Transportmittel in der Transportrichtung T oder entgegen der Transportrichtung T anzusteuern. Die Steuerimpulse werden basierend auf verschiedenen Parametern wie der Mindestdauer Tmin, dem Grenzwert G, der Sollzahl nsoll und der Position P bereitgestellt.

Die verschiedenen Steuerabschnitte 50 überwachen spezifische Parameter der Nahrungsmittelmaschine und kommunizieren mit der Steuereinrichtung 30, um den Antrieb der Transportmittel basierend auf den überwachten Parametern anzusteuern. Beispielsweise überwacht der Darmplatzerüberwachungs-Steuerabschnitt 51 Darmplatzer und steuert den Antrieb im Korrekturbetrieb an, wenn ein Darmplatzer identifiziert wird. Der Füllstandüberwachungs-Steuerabschnitt 52 überwacht den Füllstand eines Trichters und steuert den Antrieb im Korrekturbetrieb an, wenn ein Füllstanddefizit identifiziert wird. Der Gewichtskontroll-Steuerabschnitt 53 überwacht das Gewicht der an den Aufhängehaken hängenden Lebensmittel und steuert den Antrieb im Korrekturbetrieb an, wenn ein Gewichtsdefizit identifiziert wird. Der Produktionsstörungsüberwachungs-Steuerabschnitt 55 überwacht Produktionsstörungen und steuert den Antrieb im Korrekturbetrieb an, wenn eine Produktionsstörung identifiziert wird.

Die Steuereinrichtung 30 ist somit zentral für die Steuerung und Überwachung der verschiedenen Betriebsmodi und Parameter der Nahrungsmittelmaschine 1 verantwortlich, um einen effizienten und fehlerfreien Betrieb zu gewährleisten.

Die Gareinrichtung 70, die als Rauch- und/oder Kochkammer 71 ausgebildet ist, dient zum Garen der Lebensmittel. Die Gareinrichtung 70 ist mit der Aufnahmeeinrichtung 60 verbunden, die die Lebensmittel 2 von den Aufhängehaken 11 übernimmt und in Chargen 3 gruppiert. Der Rauchstock 61 der zuvor beschriebenen Aufnahmeeinrichtung 60 kann über einen Roboter 72 der Gareinrichtung 70 aufgenommen werden, der die Lebensmittel 2 in eine Rauch- und/oder Kochkammer 71 der Gareinrichtung 70 bewegt, um sie zu garen.

Die Anzeigeeinrichtung 80 umfasst eine Bedienschnittstelle 81, die dazu eingerichtet ist, eine Position P der Aufhängehaken anzuzeigen und eine Zielposition PZ zum Bewegen im Korrekturbetrieb KB auszuwählen. Die Anzeigeeinrichtung 80 zeigt die Position der Aufhängehaken an und ermöglicht die Auswahl einer Zielposition PZ. Die Bedienschnittstelle 81 ermöglicht es dem Benutzer, die Zielposition auszuwählen und die Nahrungsmittelmaschine im Korrekturbetrieb KB zu steuern.

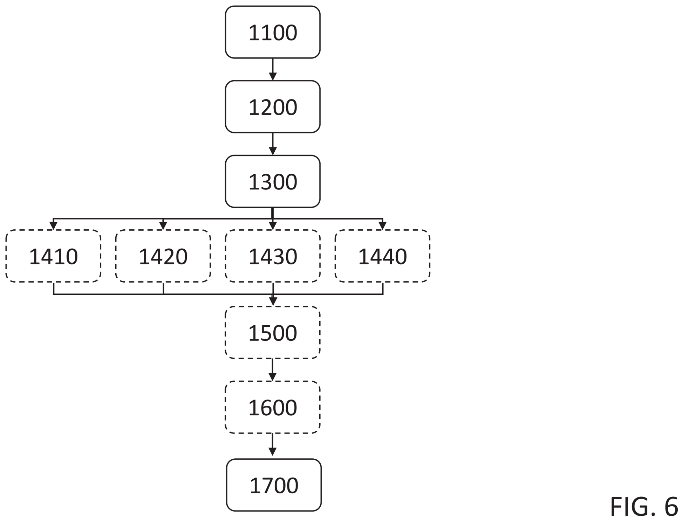

FIG. 6 zeigt ein Flussdiagramm, das die Schritte eines Verfahrens 1000 zum Betreiben einer Nahrungsmittelmaschine 1 veranschaulicht.

Das Verfahren beginnt mit dem Schritt 1100, der das Bewegen einer Mehrzahl von Aufhängehaken 11 entlang einer vordefinierten Transportbahn beschreibt. Diese Aufhängehaken 11 sind mit einem Antriebsstrang 12 gekoppelt, der durch einen Antrieb 13 bewegt wird, der mit dem Antriebsstrang 12 wirkverbunden ist.

Der zweite Schritt 1200 beschreibt das Steuern der Nahrungsmittelmaschine 1 in einem Bestückungsbetrieb BB. In diesem Schritt steuert die Steuereinrichtung 30 den Antrieb 13 so an, dass der Antriebsstrang 12 in der Transportrichtung T angetrieben wird.

Im dritten Schritt 1300 erfolgt das Übergeben eines Lebensmittels 2 in einem Übergabebereich 44 an die Aufhängevorrichtung 10 durch mindestens eine Übergabeeinrichtung 40. Dies ermöglicht das sequentielle Aufnehmen der Lebensmittel 2 durch die Aufhängehaken 11 während ihrer Bewegung entlang der Transportbahn T.

Nach dem Schritt 1300 folgen im Verfahren 1000 alternativ oder ergänzend mehrere Überwachungsschritte. Diese Überwachungsschritte umfassen:
Überwachen von Darmplatzern durch einen Steuerabschnitt 50, der mit mindestens einem optischen Sensor und der Steuereinrichtung 30 kommuniziert in Schritt 1410. Die Steuereinrichtung 30 steuert den Antrieb 13 im Korrekturbetrieb KB entgegen der Transportrichtung T an, falls ein Darmplatzer identifiziert wird.

In Schritt 1420 das Überwachen eines Füllstands eines Trichters einer Füllmaschine 20 durch einen Steuerabschnitt 50, der mit einem Füllstandsensor und der Steuereinrichtung 30 kommuniziert. Bei Identifizierung eines Füllstanddefizits steuert die Steuereinrichtung 30 den Antrieb 13 im Korrekturbetrieb KB entgegen der Transportrichtung T an.

In Schritt 1430 das Überwachen eines Gewichts von an den Aufhängehaken 11 hängenden Lebensmitteln durch einen Steuerabschnitt 50, der mit einer Wägezelle und der Steuereinrichtung 30 kommuniziert. Bei Identifizierung eines Gewichtsdefizits steuert die Steuereinrichtung 30 den Antrieb 13 im Korrekturbetrieb KB entgegen der Transportrichtung T an.

Ferner erfolgt bevorzugt in Schritt 1450 bevorzugt das Überwachen von Produktionsstörungen der Nahrungsmittelmaschine 1 durch einen Steuerabschnitt 50, der mit zumindest einer Steuerung und/oder einem Steuergerät 45 der Nahrungsmittelmaschine 1 und der Steuereinrichtung 30 kommuniziert. Bei Identifizierung einer Produktionsstörung steuert die Steuereinrichtung 30 den Antrieb 13 im Korrekturbetrieb KB entgegen der Transportrichtung T an.

Nach den Überwachungsschritten folgt in Schritt 1500 das Stoppen der Aufhängevorrichtung 10, falls eines oder mehrere der zuvor überwachten Probleme identifiziert werden, wie Darmplatzer, Füllstanddefizit, Gewichtsdefizit oder Produktionsstörung.

Der Schritt 1600 beschreibt das bevorzugte Prüfen einer Restfanglänge LR einer vordefinierten Anzahl von Aufhängehaken 11, die den Übergabebereich 41 vor dem Stoppen der Aufhängevorrichtung 10 zuletzt passiert haben. Die Steuereinrichtung 30 steuert den Antrieb 13 im Korrekturbetrieb KB vorzugsweise nur an, wenn die Restfanglänge LR unter einem vordefinierten Grenzwert G liegt.

Abschließend beschreibt der Schritt 1700 das Steuern der Nahrungsmittelmaschine 1 im Korrekturbetrieb KB, wobei die Steuereinrichtung 30 den Antrieb 13 zum Antreiben des Antriebsstrangs 12 entgegen der Transportrichtung T ansteuert.

### Bezugszeichenliste

- 1: Nahrungsmittelmaschine
- 2: Lebensmittel
- 3: Charge
- 10: Aufhängevorrichtung
- 11: Aufhängehaken
- 12: Antriebsstrang
- 13: Antrieb
- 14: Transportbahn
- 20: Füllmaschine
- 21: Füllmaschinensteuerung
- 22: Trichter
- 30: Steuereinrichtung
- 31: Speicher
- 32: Betätigungseinrichtung
- 33: Tastschalter
- 40: Übergabeeinrichtung
- 41: Transportband
- 42: Abdrehvorrichtung
- 43: Abteilvorrichtung
- 44: Übergabebereich
- 45: Steuergerät
- 50: Steuerabschnitte
- 51: Darmplatzerüberwachungs-Steuerabschnitt
- 52: Füllstandüberwachungs-Steuerabschnitt
- 53: Gewichtskontroll-Steuerabschnitt
- 54: Darmmagazinüberwachungs-Steuerabschnitt
- 55: Produktionsstörungsüberwachungs-Steuerabschnitt
- 60: Aufnahmeeinrichtung
- 61: Rauchstock
- 70: Gareinrichtung
- 71: Rauch- und/oder Kochkammer
- 72: Roboter
- 80: Anzeigeeinrichtung
- 81: Bedienschnittstelle
- BB: Bestückungsbetrieb
- KB: Korrekturbetrieb
- T: Transportrichtung
- H: Hakenabstand
- S1: (erster) Steuerimpuls
- S2: zweiter Steuerimpuls
- Tmin: Mindestdauer
- nsoll: Sollzahl
- P: Position
- RL: Restfanglänge
- G: Grenzwert
- SL1: erste Signalleitung
- SL2: zweite Signalleitung
- SL3: dritte Signalleitung
- SL4: vierte Signalleitung

## Patentansprüche

1. Nahrungsmittelmaschine (1) zum Herstellen von Lebensmitteln (2), umfassend:
- eine Aufhängevorrichtung (10) mit einer Mehrzahl von Aufhängehaken (11), die mit einem Antriebsstrang (12) gekoppelt sind und einem mit dem Antriebsstrang (12) wirkverbundenen Antrieb (13), der zum Bewegen der Aufhängehaken (11) entlang einer vordefinierten Transportbahn eingerichtet ist,
- eine Steuereinrichtung (30), die zum Steuern der Nahrungsmittelmaschine (1) in einem Bestückungsbetrieb (BB) eingerichtet ist, wobei die Steuereinrichtung (30) den Antrieb (13) zum Antreiben des Antriebsstrangs (12) in einer Transportrichtung (T) ansteuert,
- mindestens eine Übergabeeinrichtung (40), die zum Übergeben eines Lebensmittels (2) in einem Übergabebereich (44) an die Aufhängevorrichtung (10) eingerichtet ist,
wobei die Aufhängehaken (11) dazu eingerichtet sind, im Bestückungsbetrieb (BB) beim Bewegen entlang der Transportbahn (14) sequentiell in den Übergabebereich (44) hineinbewegt zu werden, um zumindest einen Abschnitt des Lebensmittels (2) von der Übergabeeinrichtung (40) aufzunehmen,
**dadurch gekennzeichnet, dass** in der Steuereinrichtung (30) ein Hakenabstand (H) zwischen jeweils zwei aufeinanderfolgenden Aufhängehaken (11) hinterlegt ist und die Steuereinrichtung (30) ferner zum Steuern der Nahrungsmittelmaschine (1) in einem Korrekturbetrieb (KB) eingerichtet ist, in welchem die Steuereinrichtung (30) ausgebildet ist, den Antrieb (13) durch Bereitstellen eines Steuerimpulses (S1) zum Antreiben des Antriebsstrangs (12) entgegen der Transportrichtung (T) derart anzusteuern, dass sich die Aufhängehaken (11) jeweils um den Hakenabstand (H) entgegen der Transportrichtung (T) bewegen.

2. Nahrungsmittelmaschine (1) nach Anspruch 1, ferner umfassend:
- eine Betätigungseinrichtung (32), insbesondere ein Tastschalter (33), die dazu eingerichtet ist, durch eine manuelle Betätigung jeweils die Steuereinrichtung (30) zum Bereitstellen des Steuerimpulses (S1) zu veranlassen.

3. Nahrungsmittelmaschine (1) nach Anspruch 2,
wobei der Steuerimpuls (S1) ein erster Steuerimpuls (S1) ist, und die Betätigungseinrichtung (32) dazu eingerichtet ist, bei einer manuellen Betätigung, die mindestens einer vordefinierten Mindestdauer (Tmin) entspricht, die Steuereinrichtung (30) zum Bereitstellen des ersten Steuerimpulses (S1) zu veranlassen und bei einer manuellen Betätigung, die kürzer als die vordefinierte Mindestdauer (Tmin) ist, die Steuereinrichtung (30) zum Bereitstellen eines zweiten Steuerimpulses (S2) zum Antreiben des Antriebsstrangs (12) in der Transportrichtung (T) zu veranlassen.

4. Nahrungsmittelmaschine (1) nach einem der vorstehenden Ansprüche,
wobei die Übergabeeinrichtung (40) mindestens ein Steuergerät (45) aufweist und die Steuereinrichtung (30) in das Steuergerät (45) der Übergabeeinrichtung (40) integriert ist.

5. Nahrungsmittelmaschine (1) nach einem der vorstehenden Ansprüche, ferner umfassend:
- eine Füllmaschine (20) zum Befüllen eines Kunst- oder Naturdarms mit einer Brätmasse,
wobei die Steuereinrichtung (30) der Füllmaschine (20) zugeordnet, insbesondere in die Füllmaschinensteuerung (21) integriert ist.

6. Nahrungsmittelmaschine (1) nach einem der vorstehenden Ansprüche, ferner umfassend:
- mindestens einen Darmplatzerüberwachungs-Steuerabschnitt (51), der zum Überwachen von Darmplatzern mit mindestens einem optischen Sensor und der Steuereinrichtung (30) kommuniziert und die Steuereinrichtung (30) dazu eingerichtet ist, für den Fall, dass der Steuerabschnitt einen Darmplatzer identifiziert, den Antrieb (13) zum Antreiben des Antriebsstrangs (12) entgegen der Transportrichtung (T) im Korrekturbetrieb (KB) anzusteuern.

7. Nahrungsmittelmaschine (1) nach einem der vorstehenden Ansprüche, ferner umfassend:
- mindestens einen Füllstandüberwachungs-Steuerabschnitt (52), der zur Füllstandüberwachung eines Trichters einer Füllmaschine (20) der Nahrungsmittelmaschine (1) mit einem Füllstandsensor und der Steuereinrichtung (30) kommuniziert und die Steuereinrichtung (30) dazu eingerichtet ist, für den Fall, dass der Steuerabschnitt ein Füllstanddefizit identifiziert, den Antrieb (13) zum Antreiben des Antriebsstrangs (12) entgegen der Transportrichtung (T) im Korrekturbetrieb (KB) anzusteuern.

8. Nahrungsmittelmaschine (1) nach einem der vorstehenden Ansprüche, ferner umfassend:
- mindestens einen Gewichtskontroll-Steuerabschnitt (53), der zur Gewichtskontrolle der an den Aufhängehaken (11) hängenden Lebensmitteln mit einer Wägezelle und der Steuereinrichtung (30) kommuniziert und die Steuereinrichtung (30) dazu eingerichtet ist, für den Fall, dass der Steuerabschnitt ein Gewichtsdefizit identifiziert, den Antrieb (13) zum Antreiben des Antriebsstrangs (12) entgegen der Transportrichtung (T) im Korrekturbetrieb (KB) anzusteuern.

9. Nahrungsmittelmaschine (1) nach einem der vorstehenden Ansprüche, ferner umfassend:
- mindestens einen Produktionsstörungsüberwachungs-Steuerabschnitt (55), der zum Überwachen von Produktionsstörungen der Nahrungsmittelmaschine (1) mit zumindest einer Steuerung und/oder zumindest einem Steuergerät (45) der Nahrungsmittelmaschine (1) und der Steuereinrichtung (30) kommuniziert und die Steuereinrichtung (30) dazu eingerichtet ist, für den Fall, dass der Steuerabschnitt eine Produktionsstörung identifiziert, den Antrieb (13) zum Antreiben des Antriebsstrangs (12) entgegen der Transportrichtung (T) im Korrekturbetrieb (KB) anzusteuern.

10. Nahrungsmittelmaschine (1) nach einem der vorstehenden Ansprüche, ferner umfassend:
- mindestens eine Aufnahmeeinrichtung (60), die dazu eingerichtet ist, an einem in Transportrichtung (T) dem Übergabebereich (44) nachgeschalteten Abnahmebereich die Lebensmittel (2) von den Aufhängehaken (11) bis zum Erreichen einer Sollzahl (nsoll) der aufgenommenen Lebensmittel (2) zu übernehmen, derart, dass die Lebensmittel (2) auf der Aufnahmeeinrichtung (60), insbesondere in Chargen (3), mit einer vordefinierten Sollzahl (nsoll) gruppiert werden,
- eine Gareinrichtung (70) zum Garen, insbesondere Kochen und/oder Räuchern der, insbesondere in Chargen (3), gruppierten Lebensmittel (2) auf der Aufnahmeeinrichtung (60).

11. Nahrungsmittelmaschine (1) nach Anspruch 10,
wobei die Aufnahmeeinrichtung (60) einen Rauchstock (61) umfasst und die Gareinrichtung (70) als Rauch- und/oder Kochkammer (71) ausgebildet ist,
wobei die Aufnahmeeinrichtung (60) ferner bevorzugt einen Roboter (72) umfasst, der dazu eingerichtet ist, den Rauchstock (61) in den Abnahmebereich zu bewegen und mit den auf den Aufhängehaken (11) aufgenommenen Lebensmitteln in Eingriff zu bringen, um die Lebensmittel (2) von den Aufhängehaken (11) auf den Rauchstock (61) zu übergeben.

12. Nahrungsmittelmaschine (1) nach einem der vorstehenden Ansprüche,
wobei die Übergabeeinrichtung (40) eine, mehrere oder sämtliche der folgenden umfasst:
- mindestens ein Transportband (41) zum Transportieren eines Lebensmittels (2) in den Übergabebereich (44),
- eine Abdrehvorrichtung (42) zum Abdrehen eines Wurststranges in eine Wurstkette,
- eine Abteilvorrichtung (43) zum Trennen und Portionieren einer Wurstkette in Wurstportionen.

13. Nahrungsmittelmaschine (1) nach einem der vorstehenden Ansprüche, ferner umfassend:
- eine Anzeigeeinrichtung (80) mit einer Bedienschnittstelle (81), wobei die Anzeigeeinrichtung (80) dazu eingerichtet ist, eine Position (P) der Aufhängehaken (11) anzuzeigen und die Bedienschnittstelle (81) zum Auswählen einer Zielposition (PZ) der Aufhängehaken (11) zum Bewegen im Korrekturbetrieb (KB) aufweist.

14. Steuereinrichtung (30) zum Steuern einer Nahrungsmittelmaschine (1), insbesondere einer Nahrungsmittelmaschine (1) nach einem der vorstehenden Ansprüche,
wobei die Steuereinrichtung (30) eine Steuerschnittstelle zur signalleitenden Verbindung mit der Nahrungsmittelmaschine (1) aufweist und dazu eingerichtet ist, die Nahrungsmittelmaschine (1) in einem Bestückungsbetrieb (BB) zu steuern, wobei die Steuereinrichtung (30) einen Antrieb (13) der Nahrungsmittelmaschine (1) zum Antreiben eines Antriebsstrangs (12) der Nahrungsmittelmaschine (1), der mit einer Mehrzahl von Aufhängehaken (11) gekoppelt ist, in einer Transportrichtung (T) ansteuert,
**dadurch gekennzeichnet, dass** in der Steuereinrichtung (30) ein Hakenabstand (H) zwischen jeweils zwei aufeinanderfolgenden Aufhängehaken (11) hinterlegt ist und die Steuereinrichtung (30) ferner zum Steuern der Nahrungsmittelmaschine (1) in einem Korrekturbetrieb (KB) eingerichtet ist, in welchem die Steuereinrichtung (30) ausgebildet ist, den Antrieb (13) durch Bereitstellen eines Steuerimpulses (S1) zum Antreiben des Antriebsstrangs (12) entgegen der Transportrichtung (T) derart anzusteuern, dass sich die Aufhängehaken (11) jeweils um den Hakenabstand (H) entgegen der Transportrichtung (T) bewegen.

15. Verfahren (1000) zum Betreiben einer Nahrungsmittelmaschine (1), insbesondere einer Nahrungsmittelmaschine (1) nach einem der Ansprüche 1 bis 13, mit den Schritten:
- Bewegen (1100) einer Mehrzahl von Aufhängehaken (11), die mit einem Antriebsstrang (12) gekoppelt sind, durch einen mit dem Antriebsstrang (12) wirkverbundenen Antrieb (13) entlang einer vordefinierten Transportbahn,
- Steuern (1200) der Nahrungsmittelmaschine (1) in einem Bestückungsbetrieb (BB), wobei eine Steuereinrichtung (30) der Nahrungsmittelmaschine (1) den Antrieb (13) zum Antreiben des Antriebsstrangs (12) in der Transportrichtung (T) ansteuert,
- Übergeben (1300) eines Lebensmittels (2) in einem Übergabebereich (44) an die Aufhängevorrichtung (10) durch mindestens eine Übergabeeinrichtung (40), und
- Steuern (1700) der Nahrungsmittelmaschine (1) in einem Korrekturbetrieb (KB), wobei in der Steuereinrichtung (30) ein Hakenabstand (H) zwischen jeweils zwei aufeinanderfolgenden Aufhängehaken (11) hinterlegt ist und die Steuereinrichtung (30) den Antrieb (13) durch Bereitstellen eines Steuerimpulses (S1) zum Antreiben des Antriebsstrangs (12) entgegen der Transportrichtung (T) derart ansteuert, dass sich die Aufhängehaken (11) jeweils um den Hakenabstand (H) entgegen der Transportrichtung (T) bewegen.

16. Verfahren (1000) nach Anspruch 15, ferner umfassend einen, mehrere oder sämtliche der folgenden Schritte:
- Überwachen (1410) von Darmplatzern durch einen Steuerabschnitt (50), der mit mindestens einem optischen Sensor und der Steuereinrichtung (30) kommuniziert, wobei die Steuereinrichtung (30) für den Fall, dass der Steuerabschnitt (50) einen Darmplatzer identifiziert, den Antrieb (13) zum Antreiben des Antriebsstrangs (12) entgegen der Transportrichtung (T) im Korrekturbetrieb (KB) ansteuert,
- Überwachen (1420) eines Füllstands eines Trichters einer Füllmaschine (20) der Nahrungsmittelmaschine (1) durch einen bzw. den Steuerabschnitt (50), der mit einem Füllstandsensor und der Steuereinrichtung (30) kommuniziert, wobei die Steuereinrichtung (30) für den Fall, dass der Steuerabschnitt (50) ein Füllstanddefizit identifiziert, den Antrieb (13) zum Antreiben des Antriebsstrangs (12) entgegen der Transportrichtung (T) im Korrekturbetrieb (KB) ansteuert,
- Überwachen (1430) eines Gewichts von an den Aufhängehaken (11) hängenden Lebensmitteln durch einen bzw. den Steuerabschnitt (50), der mit einer Wägezelle und der Steuereinrichtung (30) kommuniziert, wobei die Steuereinrichtung (30) für den Fall, dass der Steuerabschnitt (50) ein Gewichtsdefizit identifiziert, den Antrieb (13) zum Antreiben des Antriebsstrangs (12) entgegen der Transportrichtung (T) im Korrekturbetrieb (KB) ansteuert,
- Überwachung (1440) von Produktionsstörungen der Nahrungsmittelmaschine (1) durch einen bzw. den Steuerabschnitt (50), der mit zumindest einer Steuerung und/oder zumindest einem Steuergerät (45) der Nahrungsmittelmaschine (1) und der Steuereinrichtung (30) kommuniziert und die Steuereinrichtung (30) für den Fall, dass der Steuerabschnitt (50) eine Produktionsstörung identifiziert, den Antrieb (13) zum Antreiben des Antriebsstrangs (12) entgegen der Transportrichtung (T) im Korrekturbetrieb (KB) ansteuert.

17. Verfahren (1000) nach Anspruch 16, wobei das Verfahren (1000) vor dem Ansteuern des Korrekturbetriebs (KB) ferner den Schritt umfasst:
- Stoppen (1500) der die Aufhängevorrichtung (10) für den Fall, dass eines, mehrere oder sämtliche der folgenden identifiziert werden:
- Darmplatzer,
- ein Füllstanddefizit,
- ein Gewichtsdefizit, und
- eine Produktionsstörung.

18. Verfahren (1000) nach Anspruch 17, ferner umfassend den Schritt:
- Prüfen (1600) einer Restfanglänge (LR) einer vordefinierten Anzahl von den Übergabebereich (44) vor dem Stoppen der Aufhängevorrichtung (10) zuletzt passierenden Aufhängehaken (11), wobei die Steuereinrichtung (30) den Antrieb (13) zum Antreiben des Antriebsstrangs (12) entgegen der Transportrichtung (T) im Korrekturbetrieb (KB) nur für den Fall ansteuert, dass die Restfanglänge (LR) unter einem vordefinierten Grenzwert (G) liegt.
